Europäisches Patentamt

European Patent Office

Office européen des brevets

(19)

(11) Publication number: **0 372 697**
**A2**

# EUROPEAN PATENT APPLICATION

(12)

(21) Application number: **89310575.9**

(51) Int. Cl.⁵: **G01M 3/16**

(22) Date of filing: **16.10.89**

| | |
|---|---|
| (30) Priority: **08.12.88 JP 159010/88** | (71) Applicant: **JUNKOSHA CO. LTD.**<br>**25-25, Miyasaka 2-chome**<br>**Setagaya-ku Tokyo 156(JP)** |
| (43) Date of publication of application:<br>**13.06.90 Bulletin 90/24** | (72) Inventor: **Hara, Sachio**<br>**8-2-813 Toyooka 1-Chome**<br>**Iruma-shi Saitama(JP)** |
| (84) Designated Contracting States:<br>**AT BE CH DE ES FR GB GR IT LI LU NL SE** | (74) Representative: **Knott, Stephen Gilbert et al**<br>**MATHISEN, MACARA & CO. The Coach**<br>**House 6-8 Swakeleys Road**<br>**Ickenham Uxbridge Middlesex UB10 8BZ(GB)** |

(54) Oil leakage sensor.

(57) An oil leakage sensor comprises an electrical resistor (1) formed from a porous water-repellent resin containing fine electrically conductive carbon particles (3) coated with a water-repelling layer (4), and a covering (2) of a water-repellent porous resin surrounding the resistor (1).

FIG. 1

EP 0 372 697 A2

## OIL LEAKAGE SENSOR

The invention relates to oil leakage sensors comprising a resistor having a porous covering of a water-repellent material, in which the electrical resistance of the resistor changes when a hydrocarbon or solvent material penetrates the water-repellent covering.

Oil leakage sensors of this type are known comprising a resistor which is made of a drawn porous polytetrafluoroethylene resin having fine carbon particles admixed therewith, and a covering of drawn polytetrafluoroethylene surrounding the resistor. In such sensors, when oil which has passed through the continuous pores of the covering reaches and permeates the resistor, the movement of electrons between the fine carbon particles of the resistor is hindered so that the resistance of the resistor increases. As a result, the leakage of oil·can be detected.

Oil leakage sensors of this known type allow oil to invade the sensor, but substantially prevent invasion by water since the covering material is water-repellent. However, although the covering material is water-repellent, it cannot prevent invasion by water droplets which are smaller than the diameters of the fine pores in said material, and this can lead to the occurrence of false detection when the sensor is used in a high-humidity environment.

When such an oil leakage sensor is used over a long period of time, the surfaces of the fine carbon particles are oxidized by oxygen and ozone in the air so that oxygen-containing functional groups such as carboxyl groups, carbonyl groups, and hydroxyl groups are produced. As a result of this oxidation, the active hydrogen on the surfaces of the fine carbon particles increases.

Accordingly, when the sensor is used in a high-humidity environment and fine droplets of water reach the interior portions of the resistor, molecules of the water undergo a hydration reaction with the functional groups formed on the surfaces of the carbon particles or bond with the active hydrogen on the surfaces of the carbon particles so that the surface characteristics of the fine carbon particles change and the strength of the electrostatic field increases. As a result, conductivity is lessened and the resistance of the resistor increases, even though there has been no oil penetration, thus giving rise to false·oil leakage detection.

With the aim of overcoming this problem, according to the invention there is provided an oil leakage sensor comprising a resistor formed from a water-repellent porous resin containing fine electrically conductive carbon particles, and a covering of a water-repellent porous resin surrounding the resistor, characterised in that the carbon particles are provided with a water-repellent coating.

In an oil leakage sensor in accordance with the invention, at least those surfaces of the carbon particles which are exposed within the pores of the resistor are covered by a water-repellent coating. Even if fine droplets of water should pass through the pores of the material covering the resistor and permeate into the fine pores of the resistor when the sensor is used in a high-humidity environment, the water-repellent coating will prevent or inhibit the bonding of the water with oxygen-containing functional groups and active hydrogen formed on the surfaces of the fine carbon particles. As a result, the strength of the electromagnetic field on the surfaces of the fine carbon particles .is prevented from increasing, and the resistance of the resistor is therefore prevented from increasing.

Preferably the water-repellent porous resin of the resistor and/or the covering is porous expanded polytetrafluoroethylene, and the water-repellent coating preferably comprises a fluororesin.

In addition to detecting oil leakage, sensors in accordance with the invention may also be used to detect other hydrocarbon liquids and organic solvents. As used herein, therefore, the term "oil" is intended to include hydrocarbon liquids and organic solvents.

Various embodiments of the invention will now be described with reference to the accompanying drawings, in which:-

Figure 1 shows a cross-section of one example of a sensor in accordance with the invention; and,

Figure 2 illustrates diagrammatically, on an enlarged scale, fine conductive carbon particles coated with a water-repelling material.

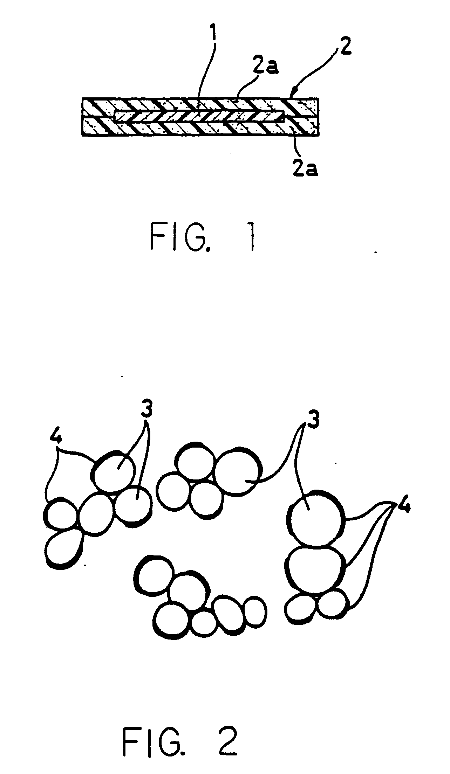

The sensor shown in Figure 1 comprises a resistor 1 formed of drawn porous polytetrafluoroethylene with admixed fine electrically conductive carbon particles. All or part of the drawn porous polytetrafluoroethylene is fibrous in form and the spaces between the fibres constitute continuous fine pores. The carbon particles are supported by the fibres and are exposed inside the continuous fine pores. The resistor 1 is surrounded by a covering 2 which is formed by two strips 2a of drawn porous polytetrafluoroethylene tape which are joined together. The ends of respective lead wires (not shown) are attached to opposite ends of the resistor 1, the lead wires extending out through the covering material 2 for connection to a detector (also not shown).

This sensor is subjected to a hydrophobic treatment as follows. A liquid rubber type fluororesin coating agent (for example Eitoshiiru 1205, manufactured by Asahi Glass K.K.) is diluted with a solvent such as freon, and mixed with a setting agent to form a solution. The solution is then applied to the oil leakage sensor so that the solution penetrates through the continuous fine pores of the covering material 2 and into the fine pores of the resistor 1. Afterwards, the impregnated sensor is dried to evaporate the solvent, and the sensor is then heated so that the coating agent is thermally set. As a result, a water-repellent coating 4 is formed on the surfaces of the fine carbon particles 3 which are exposed within the fine pores, this coating layer 4 occupying a portion of the surface of each carbon particle 3. Furthermore, the coating layer 4 is also formed on the interior surfaces of the fine pores of the covering material 2 and the resistor 1, i.e. on the surfaces of the fibres of these parts.

In operation, a weak electric current is passed through the resistor 1 of the sensor, and the resistance value of the resistor 1 is detected by the detector. In the absence of any oil leakage, the resistor 1 is conductive as a result of the flow or movement of electrons between the carbon particles 3, and the resistance value of the resistor is low. Since the coating 4 is formed only on the portions of the surfaces of the carbon particles 3 that protrude into the interiors of the fine pores of the porous polytetrafluoroethylene resin (which constitutes a water-repellent supporting matrix), the coating 4 does not impede the conductivity.

When the oil leakage sensor is used in a high-humidity environment, fine droplets of water pass through the continuous fine pores of the covering 2 and penetrate into the continuous fine pores of the resistor 1. However, since the coating 4 is formed on the exposed surfaces of the carbon particles 3, the bonding of water molecules with oxygen-containing functional groups or active hydrogen present on the surfaces of the carbon particles will be prevented or inhibited. As a result, the resistance of the resistor 1 will not rise in the absence of oil leakage, and false detection is accordingly avoided.

In the event of oil leakage coming into contact with the sensor, the leaking oil will pass through the continuous fine pores of the covering 2 and penetrate into the continuous fine pores of the resistor 1. This oil penetrates to the surfaces of the fine conductive carbon particles 3 and fills the spaces between the particles. As a result, the resistance value of the resistor 1 rises, and this is detected by the detector, hence detecting the oil leakage. In this case, since the coating 4 will absorb the oil and swell, there is no hindrance of the oil leakage detection action.

It will of course be appreciated that the present invention is not limited to the practical example described above, and that various modifications are possible. For example, it would be possible to form the coating over more or less the entire surface of each fine conductive carbon particle. In such a case, the conductivity of the resistor should not be adversely affected as long as the coating layer is extremely thin. Also, the coating layer on the conductive carbon particles may be formed from a silicone resin instead of a fluorocarbon resin.

Furthermore, the covering layer surrounding the resistor portion of the sensor may be formed by an oil passable layer of porous silicone resin or porous polypropylene instead of the preferred porous expanded polytetrafluoroethylene.

## Claims

1. An oil leakage sensor comprising a resistor (1) formed from a water-repellent porous resin containing fine electrically conductive carbon particles (3), and a covering (2) of a water-repellent porous resin surrounding the resistor (1), characterised in that the carbon particles (3) are provided with a water-repellent coating (4).

2. A sensor according to claim 1, in which the water-repellent porous resin of both the resistor (1) and the covering (2) is porous expanded polytetrafluoroethylene.

3. A sensor according to claim 1 or claim 2, in which the water-repellent coating (4) on the carbon particles (3) comprises a fluororesin.

4. A sensor according to any one of the preceding claims, in which only those surfaces of the carbon particles (3) which are exposed within the pores of the porous resin matrix of the resistor (1) are coated by said water-repellent coating (4).

5. A sensor according to claim 4, in which the water-repellent coating (4) is also formed on the surfaces of the pores of the resistor (1) and the covering (2).

FIG. 1

FIG. 2